# EUROPEAN PATENT APPLICATION

(11) **EP 4 461 475 A1**
(43) Date of publication of application: **13.11.2024**
(21) Application number: 23173145.6
(22) Date of filing: 12.05.2023
(51) Int. Cl.: B25J 9/16

(54) **GENERATING CONTROL DATA FOR AN INDUSTRIAL ROBOT**

(71) Applicant: OMRON Corporation, Kyoto 600-8530 (JP)
(72) Inventor: VITO, Raffaele, 08019 Barcelona (ES); CARLAS, Ferran, 08019 Barcelona (ES); PENALVER, Antonio, 08019 Barcelona (ES)
(74) Representative: Horn Kleimann Waitzhofer Schmid-Dreyer Patent- und Rechtsanwälte PartG mbB

(57) **Abstract**

A method (114) for generating control data for controlling an industrial robot (100), having a base (101) and a manipulator (102), that includes a driven axis (103, 105), including:
inputting (S1) a target state (115) of a distal end (107) of the manipulator section (102);
providing (S5) a robot constraint (11), that limits the distal end (107) relative to the base section (101);
providing an axis constraint (118, 119) for each axis;
performing (S6) a movement plan loop at least once, including:
generating (S7) a trajectory (117) of the distal end based on the robot constraint (116);
generating (S10) from the trajectory a list of axis states; and
if an axis state exceeds an associated axis constraint: reducing (S15) temporarily at least one value of the robot constraint, and performing (S6) the movement plan loop again; and

outputting (S17) control data including a value from each axis state.

## Description

The present invention relates to a method for generating control data for controlling a movement of an industrial robot, which robot has a base section and a manipulator section, wherein the manipulator section includes at least one driven axis. The present invention further relates to a computer program product, a control device, and an industrial robot.

One example of a method for generating control data for controlling a movement of an industrial robot is given in Document DE 10 20114 103 370 A1. It discloses a method for time discrete control of a number N of drivable axis of a manipulator, wherein: a) in an actual time step k states Zₙ(k-τ) of the N axis of the manipulator are provided regarding the respective positions q_{N}(k-τ), velocities v_{N}(k-τ), accelerations a_{N}(k-τ), and/or jerks j_{N}(k-τ) of the axis, wherein it holds that τ = 0, 1, 2, ... τ_{E}, and wherein τ_{E} is given; b) for each of the axis a position limit q_{G,N}, a velocity limit v_{G,N}, an acceleration limit a_{G,N}, and/or a jerk limit j_{G,N} are given; c) for each of the axis in the time step k a target trajectory T_{soll,N}(k) is given, which specifies the target positions q_{soll,N}(k + κ) of this axis for the present and future time steps (k, k+1, k+2, ..., wherein it holds that κ = 0, 1, 2, ... κ_{E}, wherein κ_{E} is given; d) based on the known states Z_{N}(k-τ) and the given target trajectories Tsoll,N(k) it is predictively checked, whether a realization of the target trajectories Tsoll,N(k) would exceed one of the limits q_{G,N}, v_{G,N}, a_{G,N}, and/or j_{G,N}; and in the approving case: the target trajectories T_{soll,N}(k) are iteratively corrected until target trajectories T*_{soll,N}(k) are generated, which do not exceed any of the given limits q_{G,N}, v_{G,N}, a_{G,N}, and/or j_{G,N} for the present or future time steps, and the N drivable axis of the manipulator are controlled based on the target trajectories T*_{soll,N}(k); or in any other case, the N drivable axis of the manipulator are controlled based on the target trajectories T_{soll,N}(k).

It is one object of the present invention to provide a smooth movement control suitable for real time computation.

According to an aspect of the invention, a method for generating control data for controlling a movement of an industrial robot is suggested, which robot has a base section and a manipulator section, wherein the manipulator section includes at least one driven axis. The suggested method includes inputting a target state of a distal end of the manipulator section, which target state includes a target position and optionally a target velocity. The suggested method includes providing a robot constraint, that includes a maximum position, maximum velocity, maximum acceleration, and/or maximum jerk of the distal end relative to the base section. The suggested method includes providing an axis constraint for each axis, including a maximum position, maximum velocity, and/or maximum acceleration of the associated axis. The suggested method includes performing a movement planning loop at least once, including: generating a trajectory of the distal end from a current position to the target position based on the robot constraint; generating from the trajectory for each axis a list of axis states for multiple consecutive time steps after a current time step, wherein each axis state includes a position, a velocity, and/or an acceleration of the associated axis at the associated time step; comparing for each axis each axis state, that is included in the list of axis states of the associated axis, with the axis constraint associated to this axis; and in the case that an axis state exceeds an associated axis constraint: reducing temporarily at least one value of the robot constraint, and performing the movement planning loop again. The suggested method includes outputting control data including from each axis state at least one value for the next time step.

The distal end may be referred to as an end of the manipulator section, which is most distant from the base section when measured along the manipulator section. The distal end may have and/or be an interface configured for holding a tool, for example.

The robot constraint defines one or more limits for the distal end in relation to the base section. That is, the robot constraint may be regarded as an inertial system constraint limiting the distal end.

The axis constraint(s) define(s) one or more limits for the associated driven axis. That is, each axis constraint may be regarded as a local system constraint limiting the respective axis.

A movement control according to the above method respects physical dynamic limitation both by the robot constraint on an inertial system level and by the axis constraint on a local system level. Thus, a smooth movement is generated.

In fewer words, a suggested method for generating control data for controlling an industrial robot, having a base and a manipulator, includes a driven axis, including: inputting a target state of a distal end of the manipulator section; providing a robot constrain, that limits the distal end relative to the base section; providing an axis constraint for each axis; performing a movement plan loop at least once, including: generating a trajectory of the distal end based on the robot constraint; generating from the trajectory a list of axis states; and if an axis state exceeds an associated axis constraint: reducing temporarily at least one value of the robot constraint, and performing the movement plan loop again; and outputting control data including a value from each axis state.

The control according to the above method includes generating the trajectory based on the robot constraint and comparing the axis state with the axis constraint(s) within each movement plan loop. By respecting both constraints within each loop, the method can be executed without overpassing a control cycle time. That is, the method is suitable for real time computation.

The trajectory may be defined relative to the base section. That is, the trajectory may be defined on the inertial system level. Thus, the trajectory can effortless be compared to the robot constraint. The inertial system may preferably be a given position on the surface of the earth.

According to an option, the trajectory may be generated by maximizing a value in descending order of derivative of a velocity. For example, in order to increase a velocity of the distal end: first a jerk is set to a maximum value, then the jerk is set to zero when a maximum acceleration is reached, and then the acceleration is set to zero when a maximum velocity is reached. For example, in order to decrease a velocity of the distal end: first a negative jerk is set to a maximum value, then the jerk is set to zero when a maximum deceleration is reached, and then the deceleration is set to zero when a minimum velocity is reached. This option ensures a minimal travel time between a current position and a target position. Thus, a controlled robot is efficiently used.

According to an option, the robot constraint and/or the at least one axis constraint may be set according to an type of an object attached and/or attachable to the distal end. For example: when a heavy object is held at the distal end, a maximum acceleration may be set to a lower value than when a light object is held at the distal end. For example: when a gripper at the distal end is empty, a higher maximum acceleration may be set than when the gripper is gripping an object. Thus, the movement is easily adaptable to a load carried by the manipulator. Thus, a controlled robot is efficiently used.

Optionally, the trajectory may be generated by determining a deceleration phase from the target state to a travel state and separately determining an acceleration phase from a current state to the travel state. That is, the deceleration phase from the travel state to the target state may be determined backwards from the target state to the travel state. Both phases are preferably determined separate from each other. Thus, a minimal acceleration time and a minimal deceleration time may be achieved, such that a controlled robot is efficiently used.

Optionally, the at least one temporarily reduced value may be a maximum acceleration value and/or a maximum velocity value. Lowering the value of these limits makes it possible to shortly find a valid trajectory.

Optionally, the movement plan loop may include: aborting the method in the case that an axis state exceeds an associated axis constraint after the movement plan loop has been performed for a pre-determined maximum number of iterations. Thus, a real time suitability can be maintained.

Optionally, the method may include: performing, in the case that it is determined that a maximum velocity of the trajectory after the last performing of the movement plan loop is smaller than a maximum velocity of the trajectory after an initial performing of the movement plan loop, a movement optimization loop at least once. Thus, a controlled robot can efficiently be used.

The movement optimization loop may preferably include: increasing temporarily at least one value of the robot constraint; generating a trajectory of the distal end from a current position to the target position based on the robot constraint; generating from the trajectory for each axis a list of axis states for multiple consecutive time steps after a current time step, wherein each axis state includes a position, a velocity, and/or an acceleration of the associated axis at the associated time step; comparing for each axis each associated axis state to the associated axis constraint; and in the case that an axis state exceeds an associated axis constraint: performing again the movement optimization loop.

This movement optimization loop can quickly lead to an improved trajectory. Thus, it combines a real time computation suitability with efficient use of the controlled robot.

The movement optimization loop may preferably include: aborting the method in the case that an axis state exceeds an associated axis constraint after the movement optimization loop has been performed for a pre-determined maximum number of iterations. Thus, a real time suitability can be maintained.

Optionally, the number of time steps of the list of axis states may be determined based on a predetermined time. The list of axis states allows to predict a robot movement to ensure a smooth robot movement. By pre-setting the time used for determining said number of time steps, the real time suitability can be maintained.

Optionally, said predetermined time, on the basis of which the number of time steps of the list of axis states may be determined, may be determined based on a time necessary to decrease a velocity of the distal end from a maximum velocity to zero. Thus, if no valid trajectory is found, the manipulator can be brought to a halt. Thus, the method establishes a fail-safe control. Further, the number of time-steps can be pre-set, which reduces a need for computation time during real time control.

Optionally, said number of time steps of the list of axis states may be determined based on a time necessary to decrease a velocity of the distal end from a current velocity to zero. Thus, the method establishes a fail-safe control. Further, as the number of time-steps can be reduced, less computation time may be needed.

The method is preferably performed during a single time step. Thus, a valid trajectory including a valid list of axis states is available after this / every time step.

According to an aspect of the invention, a computer program product is suggested, which comprises instructions which, when the program is executed by a computer, cause the computer to carry out the above method. As the computer program product has the features of the above method, it realizes the method's advantages.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to another aspect of the invention, a control device is suggested, which has a processing means for performing the above method, and an interface means for outputting the control data to the at least one driven axis. As the control device has the features of the above method, it realizes the above method's advantages.

According to another aspect of the invention, an industrial robot is suggested, which has a base section, a manipulator section, which includes at least one driven axis, and the above control device. As the industrial control robot has the features of the above method, it realizes the above method's advantages.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: schematically shows an industrial robot according to an embodiment of the invention;
- Fig. 2: schematically shows a flow diagram of a method for generating control data for controlling a movement of the industrial robot carried out by a control device executing a computer program product according to the embodiment of the invention; and
- Fig. 3: schematically shows a time diagram of a position value, a velocity value, an acceleration value, and a jerk value in relation to each other, which illustrate a movement of a distal end of a manipulator section of the industrial robot according to the embodiment of the invention.

In the Figures, like reference numerals designate like or functionally equivalent elements, unless otherwise indicated.

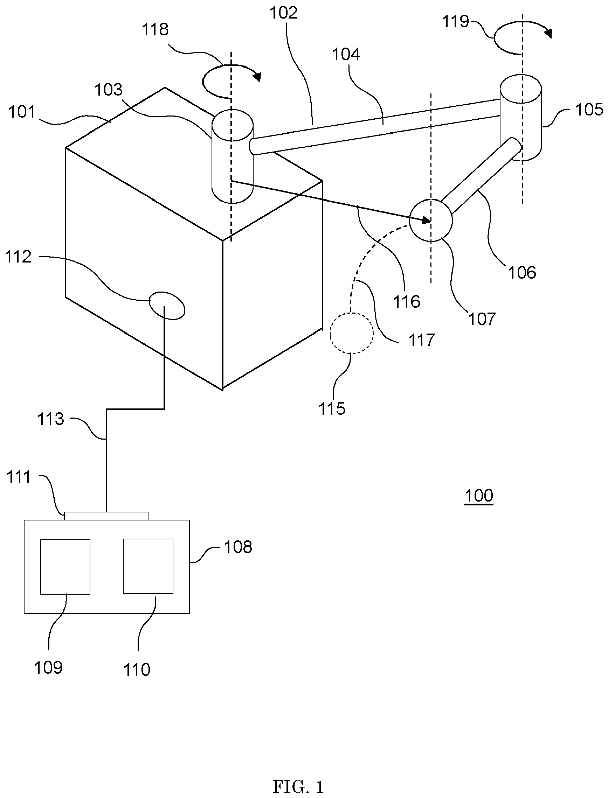

Fig. 1 exemplary depicts an industrial robot 100 according to an embodiment of the invention. The industrial robot 100 has a base section 101 and a manipulator section 102.

The base section 101 carries the manipulator 102. The base section 101 may for example be a body, which is connected to a floor of an industrial shop. The base section 101 may for example be a self-propelling device configured to autonomously navigate in a certain environment.

The manipulator section 102 has a first driven axis 103 which couples a first arm segment 104 to the base section 101 by means of at least one controllable degree of freedom. The manipulator section 102 further has a second driven axis 105, which couples a second arm section 106 to the first arm section 104 by means of at least one controllable degree of freedom. The manipulator section 102 further has a distal end 107 coupled to the second arm section 106. The distal end 107 may be a gripper for gripping objects, for example.

In the embodiment, the industrial robot 100 has a control device 108. The control device 108 is configured for controlling at least a movement of the manipulator 102 relative to the base section 101 by controlling the driven axes 103 and 105.

The control device 108 has for example a storage device 109, a processing device 110, and an interface device 111. The storage device 109 may be configured to store a computer program product for generating control data for controlling a movement of the industrial robot 100. The processing device 110 may be configured for executing the computer program to generate said control data for controlling a movement of an industrial robot 100.

The interface 111 may be configured to communicate with an interface 112 of the base section 101 and/or an interface of the driven axis / axes 103 and 105 via a communication medium 113. The communication medium 113 may comprise a cable, a bus, and/or a wireless communication, for example.

In an alternative configuration, the control device 108 may be provided separate from the industrial robot 100. For example, an industrial compound may have a central control device 108 configured for controlling a plurality of industrial robots, including one or more industrial robots 100.

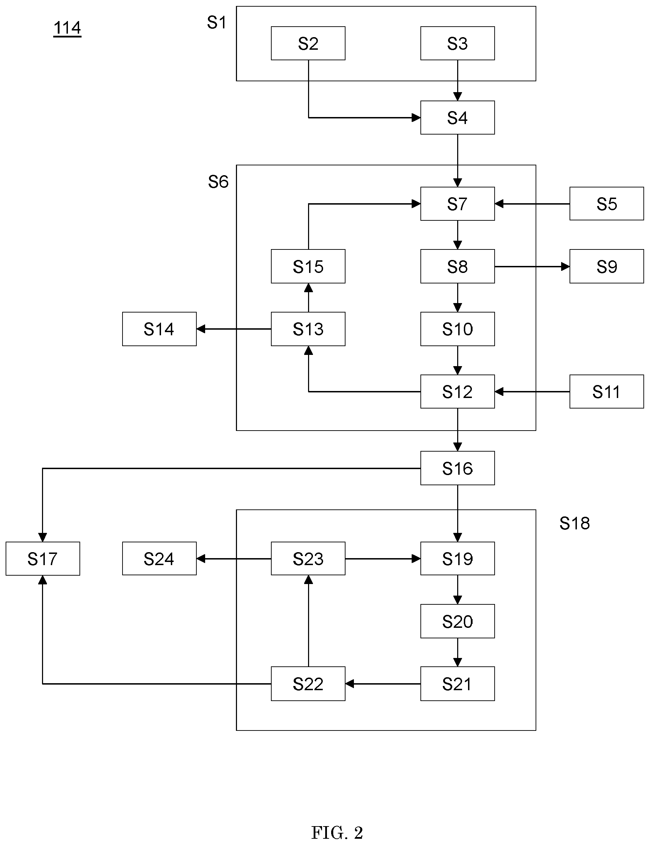

When the computer program product is executed by the processing device 110, it carries out a method 114 for generating control data for controlling a movement of the industrial robot 100, which method 114 is depicted as a flow diagram in Fig. 2.

The method 114 has a first step S1 of inputting a target state 115 of the distal end 107 of the manipulator section 102.

This step S1 may have a step S2 of reading a user input from a remote control device (not depicted) or the like. Thus, by reading a user input in step S2, the industrial robot 100 can be trained by a user.

This step S1 may additionally or alternatively have a step S3 of loading a pre-set target state 115. The pre-set target state 115 may for example be a previously trained target state 115. The pre-set target state 115 may for example be target state 115 set by another method, which for example may have called this method 114. The pre-set target state 115 may be loaded from the storage device 109.

In an optional next step S4, the target state 115 may be checked and completed. For example, the user input may only be indicative of a direction and/or a speed of the distal end 107. For example, the pre-set target state 115 may only include a target position. At the end of step S4, the target state 115 comprises a target position and a target velocity at the target position of the distal end 107. At the end of step S4, the target state 115 preferably comprises a target acceleration at the target position and/or a target jerk at the target position of the distal end 107.

In a step S5, a robot constraint 116 is provided. The robot constraint 116 is a dynamic constraint defining a limit to a movement of the distal end 107. The robot constraint includes maximum position, maximum velocity, maximum acceleration, and/or maximum jerk for the distal end 107 when moving under control of the method 114.

The method 114 is executed periodically. Each execution corresponds to one time step. Method steps S6 to S10, and S11 to S17,which will be explained below, are executed within the same time step. The method steps S1 to S5 explained above and a method step S11 explained below may be executed during this same time step, may be executed only every other time step, may be executed following a scheme, may be executed if an input value has changed, and/or the like.

In a step S6, a movement plan loop is performed at least once. The movement plan loop preferably includes steps S7, S8, S10, S12, S13, and S15, which will be described below.

In the step S7, a trajectory 117 of the distal end 107 is generated on the basis of the robot constraint 116. The trajectory 117 describes a plan to move or drive the distal end 107 from a current position to the target position.

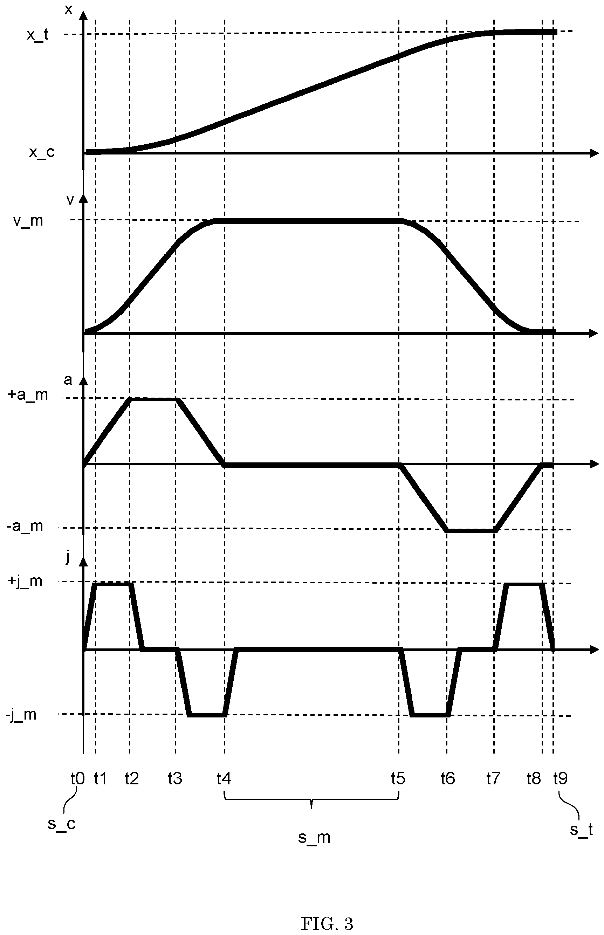

Next, a trajectory generation is explained based on Fig. 3. In Fig. 3 there are four diagrams, wherein the topmost diagram depicts a course of a position coordinate of the distal end 107 x over time t, the second diagram depicts a course of a velocity v over the time t, the third diagram depicts a course of an acceleration a over the time t, and the lowermost diagram depicts a course of a jerk j over the time t.

The Fig. 3 illustrates an exemplary trajectory 117, but for the sake of simplicity there is only one dimension x in this example. Further, for the sake of simplicity, positive limits and negative limits are considered to have the same value in this example, such as a maximum acceleration and a maximum deceleration have a same value a_m.

A time t0 corresponds to a next time step. At t0 the distal end 107 is in the current state at the current position x_c where it experiences no movement v, acceleration a, or jerk j, for example.

Between times t0 and t1, a jerk j is set to a maximal jerk j_m and is kept at this value until a time t2. Thus, between times t0 and t2, the acceleration a raises to a maximum acceleration of a_m.

At a time t3, the jerk j is set to a negative maximum j_m until a time t4. Thus, between times t2 and t3, the acceleration aa is at its upper limit value a_m, and between times t3 and t4, the acceleration a lowers down to zero acceleration. Thus, after t4, the distal end 107 travels with its maximum velocity v_m.

That is, the trajectory 117 from time t0 to time t4 is generated from a current state s_c to a travel state s_m.

The target state 115 includes a target position x_t and zero velocity, zero acceleration, and zero jerk at the target position x_t, for example. In order that the distal end 107 reaches this target state 115, the distal end 107 needs to slow down in a controlled manner. Thus, at a time t5, the jerk is set to a negative maximum value j_m, and at a time t6, the jerk is set to zero. Thus, between the times t5 and t6, the acceleration a changes from zero acceleration to maximum deceleration.

Next, at a time t7, the jerk is set to a positive maximum value j_m, and at a time t8 the jerk is set to zero again. Thus, between times t7 and t8, the acceleration changes from maximum deceleration back to zero acceleration. Thus, between times t5 and t8, the velocity v drops from max speed to zero speed. Thus, at a time t9, which is one time step after t8, the distal end 107 has arrived at the target state s_t.

Alternatively, a time t8 is set relative to a not-yet determined time t9. said time t8 is one time step before said time t9. At t8, the jerk j is set from a positive maximum value to zero. A time t7 is set relative to the time t9 before time t8. At time t7, the jerk j is set from zero to a maximum positive value. The time t7 is set such that the acceleration a can reduce in value from maximum deceleration to zero between times t7 and t8. A time t6 is set relative to the time t9 before the time t7. At t6, the jerk j is set from a maximum negative value to zero. Further, a time t5 is set relative to the time t9 before the time t6. At t5, the jerk j is set from zero to a maximum negative value. The times t5 and d6 are set such that the acceleration can increase in value from zero to maximum deceleration. The times t5 to t8 are set such that the velocity can decrease from a maximum velocity v_m to zero. Then, the time t9 is set accordingly and the times t5 to t8 are fixed. Thus, at a time t9, which is one time step after t8, the distal end 107 hass arrived at the target state s_t. That is, the trajectory 117 from time t5 to time t9 is generated from a target state s_t to the travel state s_m.

As it is shown above, the trajectory 117 is generated in this step S7 by maximizing a value in descending order of derivative of the velocity. The descending order in this example is jerk before acceleration before velocity.

In the step S8, it is determined, whether a valid trajectory 117 has been generated in step S7. If a valid trajectory 117 exists in S8, then the method 114 proceeds with a next step S 10. If no valid trajectory exists in S8, then the method 114 exits with a step S9. In the case of S9, a user might for example be supplied with a massage indicative of no valid trajectory has been found. A vlaid trajectory 117 ay be defined as a continuous connection between the current state x_c and the target state x_t, which connection satisfies the robot constraint 115.

In the step S10, a list of axis states is generated for each driven axis 103 and 105. Each axis state describes an axis position, an axis velocity, and/or an axis acceleration of the associated axis 103 or 105 at one time step, which is a point in time. The list of axis states covers a consecutive sequence of future time steps, beginning with the time step after the current time step. Thus, the list of axis states corresponds to a plan how the associated axis 103 or 105 will move and/or drive during the next time steps. Preferably, an axis state is indicative of a driving behavior of the associated axis 103 or 105. Preferably, in S10 there is generated an axis states list for every driven axis 103, 105 of the manipulator section 102. Preferably, the axis states are aggregated into a manipulator state. In this step S10, for example an inverse kinematics algorithm may be used, which is one example for an algorithm configured for determining an axis position and/or an axis state from a distal end position according to the trajectory and/or from the trajectory.

In the step S11, an axis constraint 118, 119 is provided for every axis 103, 105. Every axis constraint 118, 119 defines a limit for driving the associated axis 103, 105. For example, an axis constraint 118, 119 may include a maximum position, a maximum velocity, and a maximum acceleration of the associated axis 103, 105.

Then, in the step S12 within the movement plan loop S6, for each axis 103, 105 each axis state, which is included in the list of axis states of the associated axis 103, 105, is compared with the axis constraint 118, 119 associated to this axis 103, 105. Further, it is determined whether one or more of the axis states generated in S10 exceeds an axis constraint 118, 119 provided for the same axis 103, 105.

If it is determined in S12, that all axis states of the lists of axis states fulfill the axis constraints, then the method 114 proceeds with exiting the movement plan loop S6 to a next step S16. That is, it is determined that the planned manipulator 102 movements are within the pre-defined limits of the manipulator 102.

However, if it is determined in S12, that at least one axis state exceeds the axis constraint(s) of the associated axis 103, 105, then the method 114 proceeds within the movement plan loop S6 to a next step S13.

In the next step S13, it is determined, whether the movement plan loop S6 has been performed for a pre-determined maximum number of times. That is, in S13 the execution of this method 114 determines whether the movement plan loop exceeds a threshold. If the movement plan loop has been performed for the pre-determined number of times without resulting in a valid set of axis states list(s), then the movement plan loop is aborted, and the flow of method 114 proceeds to a steps S14, which corresponds to exiting or aborting the method 114.

However, if it is determined in S13, that the movement plan loop S6 has not yet been performed for the pre-determined number of times in this time step, then the flow of the method 114 proceeds to the step S15.

In said step S15, at least one value of the robot constraint 116 is temporarily reduced. For example, a value of a maximum jerk to be experienced by the distal end 107 is reduced in value. "Temporarily" may mean here that said reducing the robot constraint is not upheld after this time step.

Next, the flow of the method 114 proceeds within the movement plan loop to step S7 of generating a trajectory 117 of the distal end 107, but based on the robot constraint 116 as recently modified in S15.

The above movement plan loop performed at step S6 quickly provides a trajectory 117 and list(s) of axis states, which do not exceed the robot constraint 116 and the axis constraint(s) 118, 119. Thus, the method 114 is suitable for real time determination of smooth and fast trajectories 117.

In one preferred embodiment, the method 114 ends with step S16, after it is determined in step S12 that the list(s) of axis states do(es) not contain an axis state exceeding the axis constraint 118, 119 given for the same axis 103, 105.

However, if these lists of axis constraints are the result of several loops of performing the movement plan loop at S6, the time from the current state of the distal end 107 to the target state 115 might be longer than necessary. Thus, it is preferably determined in S16, whether a maximum velocity of the trajectory 117 after the last performing of the movement plan loop is smaller than a maximum velocity of the trajectory 117 after the initial performing of the movement plan loop.

If the maximum velocity v_m is not reduced, the flow of the method 114 preferably proceeds with a step S17, where a control data comprising at least one axis state for the next time step is outputted. For example, the next axis states for the first axis 103 and the next axis state for the second axis 105 may be returned to a calling method.

However, if it is determined in S16, that the maximum velocity has been reduced during the at least two cycles of performing the movement plan loop at S6, then the flow of the method 114 preferably proceeds to a step S18 of performing at least once a movement optimization loop.

Performing the movement optimization loop in S18 starts with increasing at least one value of the robot constraint 116 in a step S19.

Next is a step S20 of generating a trajectory 117 of the distal end 107 from the current position to the target position 115 based on the robot constraint 116 as given after step S18. Steps S7 and S20 may preferably have the same functionality and/or implementation.

Next is a step S21 of generating from the trajectory 117 for each axis 103, 105 a list of axis states for multiple consecutive time steps after the current time step. Steps S10 and S21 may preferably have the same functionality and/or implementation.

Next is a step S22 of comparing for each axis 103, 105 each axis state, which is included in the list of axis states of the associated axis 103, 105, with the axis constraint 118, 119 associated to this axis 103, 105. Steps S12 and S22 may preferably have the same functionality and/or implementation.

Next is a step S23 of determining a number of movement optimization loops, which indicates how often the movement optimization loop has been performed during the current time step.

Next in a step S24, the method 114 is aborted if said number of movement optimization loops within the current time steps exceeds a pre-determined threshold. The threshold is a pre-defined number, which may be internally provided within a program code and/or externally as a parameter, for example. Thus, in the case that an axis state exceeds an associated axis constraint 118, 119 after the movement optimization loop has been performed for the pre-determined maximum number of iterations, the method 144 is aborted.

If it is determined in S23, that the maximum number of movement optimization loops has not been exceeded, the flow of the method 114 proceeds back to step

S19 for beginning another performing of the movement optimization loop. Thus, the movement optimization loop results either in the trajectory 117 as outputted from the movement plan loop, or in an improved trajectory 117 if such an improved trajectory 117 exists.

Thus, the method 114 provides an axis state for each axis 103, 105 for the next time step that makes for a smooth movement of the distal end 107 and that is part of a fast movement to the target state 115. Further, the method 114 can be performed in a real time controller 108. Thus, the industrial robot 100 operates smoothly, efficiently and reliably.

Although the present invention has been described in accordance with preferred embodiments, it is obvious for the person skilled in the art that modifications are possible in all embodiments.

### REFERENCE NUMERALS

- 100: industrial robot
- 101: base section
- 102: manipulator
- 103: first driven axis
- 104: first arm segment
- 105: second driven axis
- 106: second arm segment
- 107: distal end
- 108: control device
- 109: storage device
- 110: processing device
- 111: interface device
- 112: interface device
- 113: communication medium
- 114: method for generating control data for controlling a movement of an industrial robot
- 115: target state
- 116: robot constraint
- 117: trajectory
- 118: first axis constraint
- 119: second axis constraint
- S1: inputting a target state of a distal end of a manipulator section
- S2: reading a user input
- S3: loading a pre-set target state
- S4: checking and/or completing a target state
- S5: providing a robot constraint
- S6: performing a movement plan loop
- S7: generating a trajectory of the distal end
- S8: determining whether a valid trajectory has been generated
- S9: aborting the method
- S10: generating a list of axis states for consecutive time steps
- 511: providing an axis constraint
- S12: comparing for each axis each axis state with the axis constraint of this axis
- S13: determining whether the movement plan loop has been performed for a pre-determined maximum number of iterations
- S14: aborting the method
- S15: reducing temporarily at least one value of the robot constraint
- S16: determining whether a maximum velocity of the trajectory after the last movement plan loop is smaller than a maximum velocity of the trajectory after the initial movement plan loop
- S17: outputting at least one axis states
- S18: performing a movement optimization loop at least once
- S19: increasing temporarily at least one value of a robot constraint
- S20: generating a trajectory of a distal end from a current position to a target position
- S21: generating for each axis a list of axis states for multiple consecutive time steps after a current time step
- S22: comparing for each axis each axis state with the axis constraint of this axis
- S23: determining a number of movement optimization loops
- S24: aborting the method
- x: position
- x_c: current position
- x_t: target position
- v: velocity
- v_m: maximum value of velocity
- a: acceleration
- a_m: maximum value of acceleration
- j: jerk
- j_m: maximum value of jerk
- s_c: current state
- s_m: travel state
- s_t: target state
- t0: time
- t1: time
- t2: time
- t3: time
- t4: time
- t5: time
- t6: time
- t7: time
- t8: time
- t9: time

## Claims

1. A method (114) for generating control data for controlling a movement of an industrial robot (100), which robot (100) has a base section (101) and a manipulator section (102), wherein the manipulator section (102) includes at least one driven axis (103, 105),
wherein the method (114) includes:
inputting (S1, S2, S3) a target state (115) of a distal end (107) of the manipulator section (102), which target state (115) includes a target position (x_t);
providing (S5) a robot constraint (11), that includes a maximum position, maximum velocity (v_m), maximum acceleration (a_m), and/or maximum jerk (j_m) of the distal end (107) relative to the base section (101);
providing an axis constraint (118, 119) for each axis (103, 105), including a maximum position, maximum velocity, and/or maximum acceleration of the associated axis (103, 105);
performing (S6) a movement plan loop at least once, including:
generating (S7) a trajectory (117) of the distal end (107) from a current position (x_c) to the target position (x_t) based on the robot constraint (116);
generating (S10) from the trajectory (117) for each axis (103, 105) a list of axis states for multiple consecutive time steps after a current time step, wherein each axis state includes a position (x), a velocity (v), and/or an acceleration (a) of the associated axis (103, 105) at the associated time step;
comparing (S12) for each axis (103, 105) each axis state, that is included in the list of axis states of the associated axis (103, 105), with the axis constraint (118, 119) associated to this axis (103, 105); and
in the case that an axis state exceeds an associated axis constraint (118, 119): reducing (S15) temporarily at least one value of the robot constraint (116), and performing (S6) the movement plan loop again; and
outputting (S17) control data including from each axis state for the next time step at least one value.

2. The method (114) according to claim 1, wherein the trajectory (117) is generated (S7) by maximizing a value in descending order of derivative of a velocity (v).

3. The method (114) according to any preceding claim, wherein the at least one temporarily reduced value is a maximum acceleration value (a_m) and/or a maximum velocity value (v_m).

4. The method (114) according to any preceding claim, wherein the movement plan loop includes: aborting (S14) the method (114) in the case that an axis state exceeds an associated axis constraint (118, 119) after the movement plan loop has been performed (S6) for a pre-determined maximum number of iterations.

5. The method (114) according to any preceding claim, further including:
performing (S18), in the case that it is determined (S16) that a maximum velocity (v_m) of the trajectory (117) after the last performing of the movement plan loop is smaller than a maximum velocity (v_m) of the trajectory (117) after an initial performing of the movement plan loop, a movement optimization loop at least once.

6. The method (114) according to claim 5, wherein the movement optimization loop includes:
increasing (S19) temporarily at least one value of the robot constraint (115);
generating (S20) a trajectory (117) of the distal end (107) from the current position (x_c) to the target position (x_t) based on the robot constraint (115);
generating (S21) from the trajectory (117) for each axis (103, 105) a list of axis states for multiple consecutive time steps after a current time step, wherein each axis state includes a position (x), a velocity (v), and/or an acceleration (a) of the associated axis (103, 105) at the associated time step;
comparing (S22) for each axis each axis state, that is included in the list of axis states of the associated axis (103, 105), with the axis constraint (118, 119) associated to this axis (103, 105); and
in the case that an axis state exceeds an associated axis constraint (118, 119): performing (S18) again the movement optimization loop.

7. The method (114) according to claim 6, wherein the movement optimization loop includes: aborting (S24) the method (114) in the case that an axis state exceeds an associated axis constraint (118, 119) after the movement optimization loop has been performed (S18) for a pre-determined maximum number of iterations.

8. The method (114) according to any preceding claim, wherein the number of time steps of the list of axis states is determined based on a predetermined time.

9. The method (114) according to claim 8, wherein the predetermined time is determined based on a time necessary to decrease a velocity (v) of the distal end (107) from a maximum velocity (v_m) to zero.

10. The method (114) according to any one of claims 1 to 8, wherein the number of time steps of the list of axis states is determined based on a time necessary to decrease a velocity (v) of the distal end (107) from a current velocity to zero.

11. The method (114) according to any preceding claim, wherein the method (114) is performed during a single time step.

12. A computer program product comprising instructions which, when the program is executed by a computer, cause the computer to carry out the method (114) of one of claims 1 to 11.

13. A control device (108), having a processing means for performing the method (114) according to any one of claims 1 to 12, and an interface means (111) for outputting the control data to the at least one driven axis (103, 105).

14. An industrial robot (100), having a base section (101), a manipulator section (102), which includes at least one driven axis (103, 105), and the control device (108) according to claim 13.
